# EUROPEAN PATENT APPLICATION

(11) **EP 4 633 013 A1**
(43) Date of publication of application: **15.10.2025**
(21) Application number: 24205523.4
(22) Date of filing: 09.10.2024
(51) Int. Cl.: H02K 11/40

(54) **GROUNDING ELEMENT**

(30) Priority: 12.04.2024 US 202418633758
(71) Applicant: Freudenberg-NOK General Partnership, Plymouth, MI 48170-2455 (US)
(72) Inventor: Alvarez, Diego, Plymouth, 48170-2455 (US); Fenton, Dakota, Plymouth, 48170-2455 (US); Manley, D. Anthony, Plymouth, 48170-2455 (US); Neoh, Kah Fei, Plymouth, 48170-2455 (US); Craft, Jonathan, Plymouth, 48170-2455 (US); Roth, William, Plymouth, 48170-2455 (US); Henderson, Casey, Plymouth, 48170-2455 (US)
(74) Representative: Schaumburg und Partner Patentanwälte mbB

(57) **Abstract**

A grounding element assembly for grounding electric current from a rotating shaft to a bore of a housing including a grounding element including an annular electrically conductive material formed with a hole in a center and an annular electrically conductive metal mesh formed with a hole in a center and embedded within the annular electrically conductive material. An annular conductive metal case attached to an outer perimeter of the grounding element.

## Description

### FIELD

The present disclosure relates to an electrical grounding element for voltage incurred in the rotating shafts of electric motors to a static housing.

### BACKGROUND

This section provides background information related to the present disclosure which is not necessarily prior art.
Shaft induced electrical current is experienced in electric motors. The electric current can interfere with vehicle controllers and with vehicle communication systems and lead to bearing erosion. Accordingly, it is desirable to ground the electric current experienced by the shaft.

### SUMMARY

This section provides a general summary of the disclosure, and is not a comprehensive disclosure of its full scope or all of its features.

According to an aspect of the present disclosure, a grounding element includes an annular electrically conductive material formed with a hole in a center. An annular electrically conductive metal mesh formed with a hole in a center and embedded within the annular electrically conductive material.

According to a further aspect, the annular conductive material can be made from PTFE, fabric, rubber, or other material that allows contact with a rotating shaft.

According to a further aspect, the annular electrically conductive metal mesh is made from one of copper, aluminum, steel, stainless steel and silver.

According to a further aspect, the grounding element is flat in an uninstalled state and is generally cone shaped in an installed state.

According to a further aspect, the grounding element includes a shaft engaging surface including a spiral groove.

According to a further aspect, the shaft engaging surface includes vent passages extending through the spiral groove.

According to a further aspect, the annular electrically conductive metal mesh includes metallic wool intertwined with the metal mesh.

According to an aspect of the present disclosure, a grounding element assembly for grounding electric current from a rotating shaft to a bore of a housing including a grounding element including an annular electrically conductive material formed with a hole in a center and an annular electrically conductive metal mesh formed with a hole in a center and embedded within the annular electrically conductive material. An annular conductive metal case attached to an outer perimeter of the grounding element.

According to a further aspect, the annular conductive metal case is adhered to the grounding element.

According to a further aspect, the annular conductive metal case includes a pair of metal case members that clamp the grounding element therebetween.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The drawings described herein are for illustrative purposes only of selected embodiments and not all possible implementations, and are not intended to limit the scope of the present disclosure.
FIG. 1 is a cross-sectional view of a grounding element assembly according to the principles of the present disclosure;
FIG. 2 is a cross-sectional perspective view of the grounding element assembly of FIG. 1;
FIG. 3 is a perspective view of the grounding element according to the principles of the present disclosure;
FIG. 4 is a cross-sectional view of a grounding element assembly engaging a shaft according to the principles of the present disclosure; and
FIG. 5 is a cross-sectional view of a grounding element assembly according to an alternative embodiment.

Corresponding reference numerals indicate corresponding parts throughout the several views of the drawings.

### DETAILED DESCRIPTION

Example embodiments will now be described more fully with reference to the accompanying drawings.

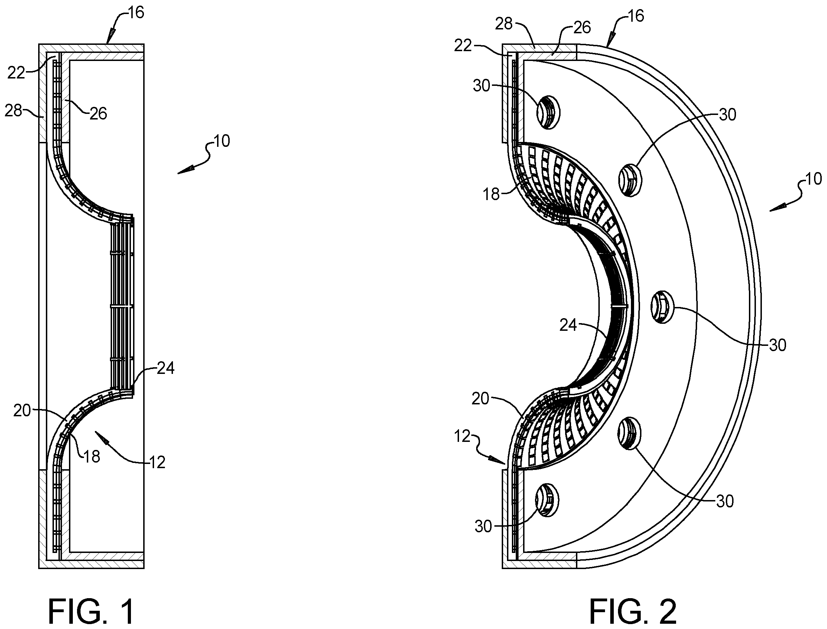

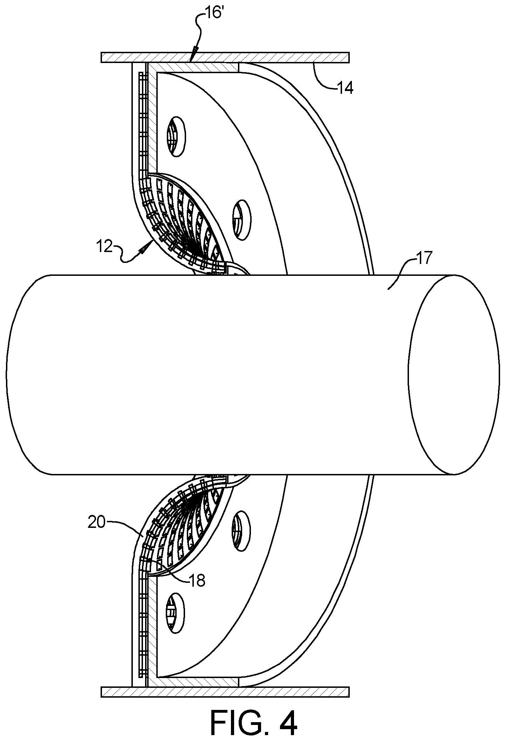

With reference to FIG. 1, a cross-sectional view of a grounding element assembly 10 according to the principles of the present disclosure will now be described. FIG. 2 is a perspective view of the cross-section of the grounding element assembly 10. The grounding element assembly 10 includes a grounding element 12 that can be secured within a bore 14 of a housing (shown in FIG. 4) by a conductive metal case 16. The grounding element 12 contacts a shaft 17 (shown in FIG. 4).

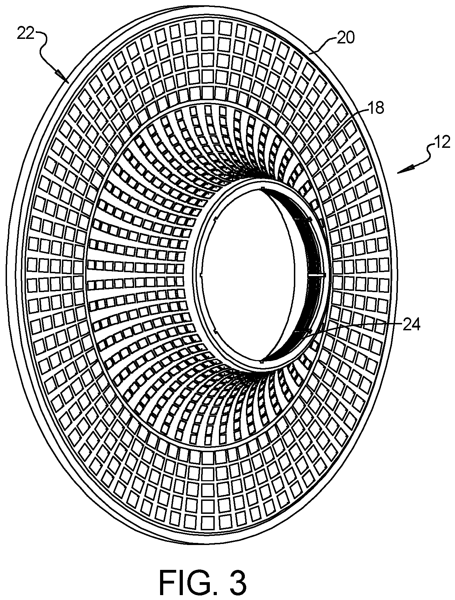

With reference to FIG. 3, the grounding element 12 includes a metal mesh 18 embedded within a conductive material 20. The metal mesh 18 can be made from one of copper, aluminum, steel, stainless steel, silver and other electrically conductive metals. The grounding element 12 includes a circular outer diameter 22 and a through hole 24. The conductive material 20 can include a PTFE (polytetrafluoroethylene) material and can optionally include electrically conductive additives. The conductive material 20 can be formed as a disk that can be heated to be softened so that the metal mesh 18 in a disk shape can be pressed into the softened material 20. One or both of the metal mesh 18 and the conductive material 20 can be formed in a partial hyperboloid cone shape or other curved cone shape, as shown. Alternatively, the partial hyperboloid cone shape can be formed by placing the metal mesh 18 and the material 20 in a mold to shape the grounding element 12. An outer perimeter of the grounding element 12 is generally planar.

The conductive metal case 16 can be formed by a pair of case members 26 and 28 that can each be in an L-shaped cross-section that can clamp the outer perimeter of the grounding element 12 therebetween. The metal case 16 and the grounding element 12 can be provided with fluid flow holes 30 that can allow the passage of lubricants therethrough. With reference to FIG. 4, the conductive metal case can include a single case member 16' with the grounding element 12 adhered to the single case member 16'.

The grounding element 12 can be provided with spiral grooves 32 along a shaft contact surface adjacent the through hole 24. The contact surface can optionally include vent passages 34 that extend longitudinally through the spiral grooves 32. The grooves 32 and vent passages 34 can bump lubricant away to promote conductivity between the shaft 17 and the grounding element 12.

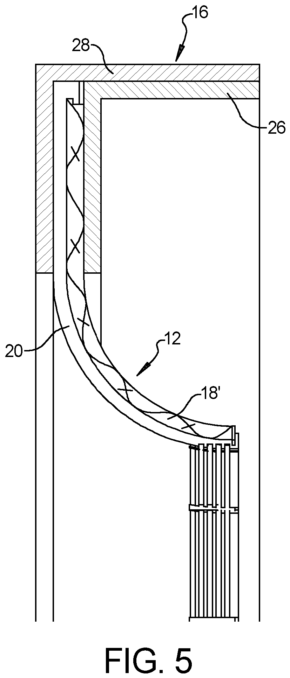

With reference to FIG. 5, the grounding element 12' can alternatively include a conductive intertwined wool/metal weave 18' that is embedded within a conductive material 20. The wool/metal weave 18' can be made from one of copper, aluminum, steel, stainless steel, silver and other electrically conductive metals that is interwoven with a wool material. The grounding element 12' is shown without any grooves on the shaft contact surface, although it should be understood that spiral grooves and/or vent passages can be formed in the contact surface.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A grounding element, comprising:
an annular electrically conductive material formed with a hole in a center; and
an annular electrically conductive metal mesh formed with a hole in a center and embedded within the annular electrically conductive material.

2. The grounding element according to claim 1, wherein the annular conductive material is made from PTFE or other material.

3. The grounding element according to claim 1 or 2, wherein the annular electrically conductive metal mesh is made from one of copper, aluminum, steel, stainless steel and silver.

4. The grounding element according to one of the preceding claims, wherein the grounding element is generally cone shaped.

5. The grounding element according to one of the preceding claims, wherein the grounding element includes a shaft engaging surface including a spiral groove.

6. The grounding element according to one of the preceding claims, wherein the annular electrically conductive metal mesh includes steel wool intertwined with the metal mesh.

7. A grounding element assembly for grounding electric current from a rotating shaft to a bore of a housing, comprising:
a grounding element including an annular electrically conductive material formed with a hole in a center and an annular electrically conductive metal mesh formed with a hole in a center and embedded within the annular electrically conductive material; and
an annular conductive metal case attached to an outer perimeter of the grounding element.

8. The grounding element assembly according to claim 7, wherein the annular conductive material is made from PTFE.

9. The grounding element assembly according to claim 7 or 8, wherein the annular electrically conductive metal mesh is made from one of copper, aluminum, steel, stainless steel and silver.

10. The grounding element assembly according to one of claims 7 to 9, wherein the grounding element is generally cone shaped.

11. The grounding element assembly according to one of claims 7 to 10, wherein the grounding element includes a shaft engaging surface including a spiral groove.

12. The grounding element assembly according to claim 11, wherein the shaft engaging surface includes vent passages extending through the spiral groove.

13. The grounding element assembly according to one of claims 7 to 12, wherein the annular electrically conductive metal mesh includes steel wool intertwined with the metal mesh.

14. The grounding element assembly according to one of claims 7 to 13, wherein the annular conductive metal case is adhered to the grounding element.

15. The grounding element assembly according to one of claims 7 to 14, wherein the annular conductive metal case includes a pair of metal case members that clamp the grounding element therebetween.
